# EUROPEAN PATENT APPLICATION

(11) **EP 4 836 500 A1**
(43) Date of publication of application: **04.11.2026**
(21) Application number: 23962798.7
(22) Date of filing: 29.12.2023
(51) Int. Cl.: H04W 24/08, H04W 12/041

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN); WANG, Huiming, Dongguan, Guangdong 523860 (CN); HUANG, Cuihe, Dongguan, Guangdong 523860 (CN); LI, Meng, Dongguan, Guangdong 523860 (CN); XU, Jing, Dongguan, Guangdong 523860 (CN)
(74) Representative: Mewburn Ellis LLP
(86) International application number: PCT/CN2023/143313
(87) International publication number: WO 2025/138124

(57) **Abstract**

The present application relates to a communication method, a device, a computer readable storage medium, a computer program product, and a computer program. The method comprises: receiving a reflected signal of a downlink sensing signal, wherein the downlink sensing signal is generated on the basis of a sensing key shared by a first terminal and an access network device.

## Description

### TECHNICAL FIELD

The present application relates to the field of communications, and more particularly, to a communication method, a device, a computer-readable storage medium, a computer program product, and a computer program.

### BACKGROUND

In the related art, 3rd generation partnership project (3GPP) technologies have initiated research on communication services integrated with sensing. To achieve the purpose of tracking and potentially identifying any targets (sensing targets) in the environment, sensing services provided in this communication-sensing integrated scenario transmit sensing signals from a terminal and/or a base station and measure echo signals of the sensing signals via a terminal used for sensing and/or an sensing access network device. However, in the above sensing scenario, how to ensure the security of the sensing signals themselves, thereby ensuring the security of the entire sensing scenario, becomes a problem that needs to be addressed.

### SUMMARY

Embodiments of the present application provide a communication method, a device, a computer-readable storage medium, a computer program product, and a computer program.

The embodiments of the present application provide a communication method performed by a first terminal, including:
receiving a reflected signal of a downlink sensing signal; where the downlink sensing signal is generated based on a sensing key shared between the first terminal and an access network device.

The embodiments of the present application provide a communication method performed by an access network device, including:
transmitting a downlink sensing signal; where the downlink sensing signal is generated based on a sensing key shared between the access network device and one or more nodes.

The embodiments of the present application provide a communication method performed by a core network device, including:
transmitting a sensing key to an access network device; where the sensing key is used by the access network device to generate a downlink sensing signal.

The embodiments of the present application provide a first terminal, including:
a first communication unit, configured to receive a reflected signal of a downlink sensing signal; where the downlink sensing signal is generated based on a sensing key shared between the first terminal and an access network device.

The embodiments of the present application provide an access network device, including:
a second communication unit, configured to transmit a downlink sensing signal; where the downlink sensing signal is generated based on a sensing key shared between the access network device and one or more nodes.

The embodiments of the present application provide a core network device, including:
a third communication unit, configured to transmit a sensing key to an access network device; where the sensing key is used by the access network device to generate a downlink sensing signal.

The embodiments of the present application provide a first terminal including a transceiver, a processor, and a memory. The memory is configured to store a computer program, and the processor is configured to call the computer program stored in the memory and run the computer program, to enable the first terminal to perform the above method.

The embodiments of the present application provide an access network device including a transceiver, a processor, and a memory. The memory is configured to store a computer program, and the processor is configured to call the computer program stored in the memory and run the computer program, to enable the access network device to perform the above method.

The embodiments of the present application provide a core network device including a transceiver, a processor, and a memory. The memory is configured to store a computer program, and the processor is configured to call the computer program stored in the memory and run the computer program, to enable the core network device to perform the above method.

The embodiments of the present application provide a chip configured to implement the above methods.

Specifically, the chip includes a processor, which is configured to call a computer program from a memory and run the computer program to enable a device equipped with the chip to perform the above methods.

The embodiments of the present application provide a computer-readable storage medium, which is configured to store a computer program that, when executed by a device, enables the device to perform the above methods.

The embodiments of the present application provide a computer program product including computer program instructions, where the computer program instructions enable a computer to perform the above methods.

The embodiments of the present application provide a computer program which, when executed on a computer, enables the computer to perform the above methods.

By adopting the above solution, a sensing key shared only between a receiving terminal and an access network device is used to generate a downlink sensing signal. In this way, only the receiving terminal that shares the sensing key with the access network device can correctly receive and measure the downlink sensing signal, which can enhance the security of the downlink sensing signal itself, thereby ensuring the security of sensing scenarios.

### BRIEF DESCRIPTION OF THE DRAWINGS

FIG. 1 is a schematic diagram illustrating an application scenario according to the embodiments of the present application.
FIG. 2 is a schematic flowchart of a communication method according to an embodiment of the present application.
FIG. 3 is a schematic flowchart of a communication method according to another embodiment of the present application.
FIG. 4 is a schematic flowchart of a communication method according to yet another embodiment of the present application.
FIG. 5 is a schematic diagram illustrating a calculation process of a sensing sequence according to an embodiment of the present application.
FIG. 6 is a schematic diagram illustrating a downlink sensing scenario according to an embodiment of the present application.
FIG. 7 is an example diagram of a processing flow of a communication method in a non-roaming scenario according to an embodiment of the present application.
FIG. 8 is an example diagram of a processing flow of a communication method in a roaming scenario according to an embodiment of the present application.
FIG. 9 is an example diagram of another processing flow of a communication method in a non-roaming scenario according to an embodiment of the present application.
FIG. 10 is an example diagram of a processing flow of a communication method in a group scenario according to an embodiment of the present application.
FIG. 11 is a schematic block diagram of a first terminal according to an embodiment of the present application.
FIG. 12 is a schematic block diagram of an access network device according to an embodiment of the present application.
FIG. 13 is a schematic block diagram of a core network device according to an embodiment of the present application.
FIG. 14 is a schematic block diagram of a communication device according to an embodiment of the present application.
FIG. 15 is a schematic block diagram of a chip according to the embodiments of the present application.
FIG. 16 is a schematic block diagram of a communication system according to the embodiments of the present application.

### DETAILED DESCRIPTION

The technical solutions in the embodiments of the present application may be applied to various communication systems, such as LTE, LTE-A, NR, NR evolution, WLAN, or WiFi, or may be applied to other communication systems.

The embodiments of the present application describe various embodiments in conjunction with a network device and a terminal. The terminal may be mobile or fixed, and may also be referred to as a mobile station, a user unit, or the like. The terminal may be a station in WLAN, which may be a terminal such as a smart terminal, a wireless modem, a laptop, or a pad. In the embodiments of the present application, the terminal may be a VR terminal/ AR terminal, an industrial control terminal, an unmanned driving terminal, a telemedicine terminal, a smart grid terminal, a transportation safety terminal, a smart city terminal, a smart home wireless terminal, or the like. As an example but not a limitation, in the embodiments of the present application, the terminal may also be a wearable device.

In the embodiments of the present application, the network device may be a device used for communicating with the terminal. The network device may be an access point in WLAN, or may be an evolutional base station in LTE, a relay station, or an in-vehicle device, a wearable device, a network device (gNB) in an NR network, a network device in a future evolved PLMN network, a network device in a non-terrestrial network, or the like. As an example but not a limitation, in the embodiments of the present application, the network device may have mobile characteristics. For example, the network device may be a mobile device.

It should be understood that the terms "system" and "network" are often used interchangeably herein. The term "and/or" herein is only an association relationship to describe associated objects, indicating that there may be three kinds of relationships; for example, "A and/or B" may represent three cases where: A exists alone, both A and B exist, and B exist alone. In addition, a character "/" herein generally indicates that the associated objects before and after this character are in an "or" relationship. It should be understood that, "indicate" mentioned in the embodiments of the present application may mean a direct indication, an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B. In the description in the embodiments of the present application, the term "correspond" may mean that there is a direct correspondence or an indirect correspondence between the two, or may mean that there is an association relationship between the two, or may mean a relationship of indicating and being indicated, or a relationship of configuring and being configured, or the like.

To facilitate the understanding of the technical solutions of the embodiments of the present application, related art of the embodiments of the present application are described below. The following related art, as optional solutions, may be arbitrarily combined with the technical solutions of the embodiments of the present application, and those combined solutions all belong to the protection scope of the embodiments of the present application.

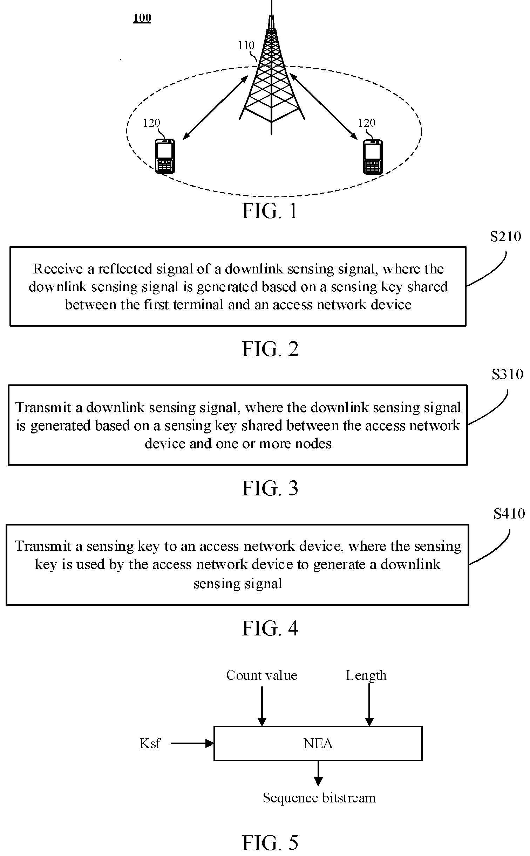

FIG. 1 exemplarily illustrates a communication system 100. The communication system includes a network device 110 and two terminals 120. In a possible implementation, the communication system 100 may include a plurality of network devices 110, each of which may have a coverage area in which other number of terminal devices 120 are included, which is not limited in the embodiments of the present application. In a possible implementation, the communication system 100 may further include other network entities, such as a mobility management entity, and an access and mobility management function, which is not limited in the embodiments of the present application. Here, the network device may include an access network device and a core network device. That is, the communication system may further include a plurality of core networks used for communicating with the access network device. The access network device may be a base station in an LTE, LTE-A, or NR system. Taking the communication system illustrated in FIG. 1 as an example, the communication device may include a network device and terminal with the communication function. The communication device may also include other devices in the communication system, such as a network controller, a mobility management entity, and other network entities, which is not limited in the embodiments of the present application.

FIG. 2 is a schematic flowchart of a communication method performed by a first terminal according to an embodiment of the present application. The method includes at least part of the following content.

In S210, receive a reflected signal of a downlink sensing signal, where the downlink sensing signal is generated based on a sensing key shared between the first terminal and an access network device.

FIG. 3 is a schematic flowchart of a communication method performed by an access network device according to another embodiment of the present application. The method includes at least part of the following content.

In S310, transmit a downlink sensing signal, where the downlink sensing signal is generated based on a sensing key shared between the access network device and one or more nodes.

FIG. 4 is a schematic flowchart of a communication method performed by a core network device according to yet another embodiment of the present application. The method includes at least part of the following content.

In S410, transmit a sensing key to an access network device, where the sensing key is used by the access network device to generate a downlink sensing signal.

The access network device may include at least one of: a base station, a gNB, an eNB, a network device in a future evolved PLMN network, a network device in a NTN network, or a satellite.

The downlink sensing signal may also be referred to as any one of a downlink sensing reference signal or a sensing reference signal. For example, the downlink sensing reference signal may be one of a positioning reference signal (PRS), a demodulation reference signal (DM-RS), or a channel state information reference signal (CSI-RS). All possible specific types of downlink sensing reference signals are not limited or exhaustively listed here.

The reflected signal of the downlink sensing signal may refer to: a signal generated as a result of the downlink sensing signal being reflected by a sensing target. In some possible examples, the reflected signal of the downlink sensing signal may also be referred to as an echo signal of the downlink sensing signal, an echo signal, or a reflected signal. All possible names for the reflected signal of the downlink sensing signal are not limited or exhaustively listed here. In some possible examples, the sensing target may also be referred to simply as a target.

In a single-transmit single-receive downlink sensing scenario, the downlink sensing signal transmitted by the access network device may be received by a node and the reflected signal of the downlink sensing signal measured by the node, and the node is the first terminal.

In a single-transmit group-receive downlink sensing scenario, the downlink sensing signal transmitted by the access network device may be received by a plurality of nodes and the reflected signal of the downlink sensing signal measured by the plurality of nodes, and the plurality of nodes may belong to the same group.

The group to which the plurality of nodes belong is referred to as a first group. Any node among the plurality of nodes in the first group may be a terminal or another access network device, and the device types of different nodes may be the same or different. For example, the first group may include one or more terminals and/or one or more other access network devices, and any one of the one or more terminals is the first terminal.

In some possible implementations, the access network device shares a sensing key with each of the one or more nodes. The function of the sensing key is to calculate a sensing sequence, that is, the same sensing key used for calculating the sensing sequence is stored in the access network device and each node.

Optionally, at the side of one or more nodes, taking the first terminal as an example, the sensing key is calculated based on a first shared key. The first shared key is one of: a first key shared between the first terminal and the access network device, a second key shared between the first terminal and a core network device, or a group key corresponding to a first group to which the first terminal belongs.

Optionally, taking the first terminal as an example, the sensing key is calculated based on the first shared key and at least one of the following parameters: an identifier of the access network device, a second random number, an identifier of the first terminal, identifiers of a plurality of nodes in the first group, or an identifier of a sensing service.

Optionally, at the access network device side, the sensing key is calculated based on a second shared key. The second shared key is one of: a first key shared between a first terminal and the access network device or a group key corresponding to a first group, and the first group includes the first terminal.

Optionally, at the access network device side, the sensing key is calculated based on the second shared key and at least one of the following parameters: an identifier of the access network device, a second random number, an identifier of the first terminal, identifiers of a plurality of nodes in the first group, or an identifier of a sensing service.

Optionally, at the access network device side, the sensing key may be configured by a core network device. The sensing key is shared between a first terminal and the access network device, and the first terminal is one of the one or more nodes.

Next, the detailed calculation processing of the sensing key performed by the access network device and each node will be described through embodiments of various downlink sensing scenarios.

In an embodiment, in a single-transmit single-receive downlink sensing scenario, the first terminal may be the only node that measures the reflected signal of the downlink sensing signal, and the sensing key is shared between the first terminal and the access network device. In this embodiment, both the first terminal and the core network device calculate the sensing key, and the sensing key at the access network device side is configured.

At the first terminal side, the sensing key is calculated based on a first shared key, where the first shared key is a second key shared between the first terminal and the core network device. That is, the processing of the first terminal may further include: calculating the sensing key based on the second key shared between the first terminal and the core network device. As long as the timing for the first terminal to calculate the sensing key is before demodulating the reflected signal of the downlink sensing signal, such implementation falls within the protection scope of this embodiment.

At the access network device side, the sensing key is configured. Before the access network device transmits the downlink sensing signal, the method further includes: receiving the sensing key from the core network device.

At the core network device side, the sensing key is calculated based on the second key shared between the first terminal and the core network device. The processing of the core network device may include: calculating the sensing key based on the second key shared with the first terminal; and transmitting a first request to the access network device, where the first request can carry the sensing key. The function of the first request may include at least one of: for triggering sensing services, for configuring sensing information, for configuring sensing-related information, or for configuring sensing security information.

The core network device may include at least one of: an access and mobility management function (AMF), an authentication server function (AUSF), a security anchor function (SEAF), an AKMA server (AKMA anchor function (AAnF)), a GBA server bootstrapping server function (BSF), a security function (SF), or an application function (AF). The AMF and SEAF may also be co-located.

Correspondingly, the second key shared between the first terminal and the core network device may be one of: K_{AMF} shared between the first terminal and the AMF, K_{SEAF} shared between the first terminal and the AUSF (AMF), K_{AKMA} shared between the first terminal and the AKMA, K_{AK} shared between the first terminal and the AF, K_{SF} shared between the first terminal and the SF, or a GBA key such as K_{sNAF} shared between the first terminal and a GBA server. It should be understood that the description here is for exemplary purposes only, and does not impose a limitation on or exhaustively list all possible types of the second key.

It should be understood that since both the first terminal and the core network device essentially calculate the sensing key based on the second key, and the first terminal and the core network device also use the same key algorithm and other identical parameters to calculate the sensing key, the sensing keys they obtained are the same in theory. In this embodiment, no distinction is made between different names for the sensing key calculated by different devices.

The key algorithm used by the first terminal and the core network device to calculate the sensing key may be default or specified by a protocol. For example, the key algorithm may include at least one of: a key derivation function (KDF), a first authentication function, a second authentication function, a third key generation function (e.g., denoted as f3), a fourth key generation function (e.g., denoted as f4), a fifth key generation function (e.g., denoted as f5), a hash algorithm, an advanced encryption standard (AES), SNOW third generation (SNOW 3G), ZUChongzhi (ZUC), an XOR operation, or a direct operation. The hash algorithm may include hash-based message authentication code-secure hash algorithm-256(HMAC-SHA-256, also denoted as SHA-256), or other hash algorithms or hash functions may be used, which are not exhaustively listed in this embodiment.

In an example where the second key is K_{AMF}, the calculation of the sensing key Ksf based on the second key at the first terminal and the core network device may be represented by the following formula: Ksf = KDF(K_{AMF}).

Optionally, at the first terminal side and the core network device side, the sensing key is calculated based on the second key shared between the first terminal and the core network device and at least one of the following parameters: an identifier of the access network device, a second random number, an identifier of the first terminal, or an identifier of a sensing service.

The identifier of the sensing service may also be replaced with a sensing service type. The identifier of the sensing service may be denoted as sensing service ID.

The second random number may be denoted as Nonce1.

In an example where the second key is K_{AMF}, at the first terminal side and the core network device (AMF) side, the following formula may be used for calculating the sensing key: Ksf = KDF(K_{AMF}, "Sensing", sensing service ID, UE ID, gNB ID, Nonce1), where Ksf denotes the sensing key, "Sensing" represents an indicator of the sensing service, sensing service ID is the ID of the sensing service, UE ID is the identifier of the first terminal, and gNB ID is the identifier of the access network device. Except for the second key K_{AMF}, all the other parameters in the formula are optional.

In an example where the second key is K_{SEAF}, at the first terminal side and the core network device (AUSF) side, the following formula may be used for calculating the sensing key: Ksf = KDF(K_{SEAF}, "Sensing", sensing service ID, UE ID, gNB ID, Nonce1). The meanings of the parameters in this formula are the same as these in the previous example and will not be repeated. Except for the second key K_{SEAF}, all the other parameters in the formula are optional.

Furthermore, the second random number may be generated by the core network device. At the first terminal side, the identifier of the sensing service and/or the second random number may be configured.

Specifically, at the first terminal side, the method further includes: receiving first information, where the first information includes at least one of: the identifier of the sensing service or the second random number. As long as the timing for the first terminal to receive the first information is before the first terminal demodulates the reflected signal of the downlink sensing signal, such implementation falls within the protection scope of this embodiment. For example, the reception may occur before the reflected signal of the downlink sensing signal is received.

In one case, the first terminal receiving the first information may be: receiving the first information from the core network device. Correspondingly, the processing at the core network device side further includes: receiving a sensing service request from an SF, which carries an identifier of a sensing service; generating the second random number; and transmitting the first information to the first terminal that includes at least one of: the identifier of the sensing service or the second random number. The first information may be carried in a second request transmitted from the core network device to the first terminal. The function of the second request may include at least one of: for triggering a sensing service, for configuring sensing information, for configuring sensing-related information, or for configuring sensing security information.

It should be understood that in this case, according to the core network device from which the first terminal receives the first information, the type of the second key used by the first terminal may also be determined. For example, if the first terminal receives the first information from an AMF, the second key is determined to be K_{AMF}. As another example, if the first terminal receives the first information from an AUSF, the second key is determined to be K_{SEAF}. As yet another example, if the first terminal receives the first information from an AAnF, the second key is determined to be K_{AKMA} or K_{AF}. AS still another example, if the first terminal receives the first information from an NAF, the second key is determined to be K_{sNAF}.

In one case, the first terminal receiving the first information may be: receiving the first information from the access network device.

The processing of the core network device before calculating the sensing key further includes: receiving a sensing service request from an SF, where the sensing service request carries an identifier of a sensing service. The processing of the core network device after calculating the sensing key further includes: transmitting second information to the access network device, where the second information includes at least one of: the identifier of the sensing service or the second random number. The second information may be carried in the aforementioned first request, that is, the first request may carry the sensing key, the identifier of the sensing service, and the second random number. The sharing of the first request is consistent with the above embodiments. For example, the function of the first request may include at least one of: for triggering a sensing service, for configuring sensing information, for configuring sensing-related information, or for configuring sensing security information.

Correspondingly, the processing of the access network device may include: receiving the second information from the core network device. Furthermore, the processing of the access network device after receiving the second information may include: transmitting the first information to the one or more nodes, where the first information includes at least one of: the identifier of the sensing service or the second random number. In this embodiment, there is only one node, which is the first terminal. The first information transmitted by the access network device may be carried in a third request transmitted from the access network device to the first terminal. The function of the third request may include at least one of: for triggering a sensing service, for configuring sensing information, for configuring sensing-related information, or for configuring sensing security information.

It should be understood that in this case, the type of the second key used by the first terminal may be default or specified by a protocol. Alternatively, when the access network device transmits the third request to the first terminal, the third request may carry an identifier of the core network device (e.g., at least one of an ID, name, number, or the like.) in the third request. Correspondingly, the first terminal can determine the type of the second key based on the identifier of the core network device.

In an embodiment, in a single-transmit single-receive downlink sensing scenario, the first terminal may be the only node that measures the reflected signal of the downlink sensing signal, and both the first terminal and the access network device calculate the sensing key.

At the first terminal side, the sensing key is calculated based on a first shared key, where the first shared key is a first key shared between the first terminal and the access network device. At the access network device side, the sensing key is calculated based on a second shared key, where the second shared key is the first key shared between the first terminal and the access network device.

That is, the first shared key at the first terminal and the second shared key at the access network device are essentially the same in this embodiment, which are both the first key shared between the first terminal and the access network device. Therefore, in the following description of this embodiment, no distinction is made between the first shared key and the second shared key, and the processing of calculating the sensing key based on the first key is used for illustration.

The first key shared between the first terminal and the access network device may include one of: an access stratum key shared between the first terminal and the access network device, an access stratum security base key shared between the first terminal and the access network device, a next-hop (NH) key shared between the first terminal and the access network device, or a physical layer key shared between the first terminal and the access network device.

The access stratum (AS) security base key may be K_{gNB}. As an example, K_{gNB} may be the initial K_{gNB} or K_{NG-RAN} as specified in relevant protocols. Alternatively, K_{NG-RAN} may also be denoted as K_{NG-RAN}*, or as a non-initial key K_{gNB}. The derivation method of the access stratum security base key is not limited in this embodiment.

The access stratum key may include at least one of: a user plane (UP) integrity protection (or verification) key K_{Upint}, a UP confidentiality key K_{UPenc}, a control plane integrity protection (or verification) key K_{RRCint}, or a control plane confidentiality key K_{RRCenc}. The derivation method of each access stratum key is not limited in this embodiment.

The physical layer key may be generated based on characteristics of the physical layer channel between the first terminal and the access network device. The specific method for generating the physical layer key is not limited in this embodiment. For example, the physical layer key maybe denoted as Kphy.

It should be understood that the above is only an exemplary description of the first key. In actual implementation, the first key may also be a key generated or shared in other methods. Not all types of keys that can serve as the first key is limited or exhaustively listed herein.

Optionally, the first key used by the first terminal and the access network device may be a default key at the two devices or specified by a protocol. For example, the first terminal and the access network device may use K_{NG-RAN} as the first key by default.

Optionally, the first terminal may determine the first key. The processing of the first terminal before demodulating the reflected signal of the downlink sensing signal may further include: transmitting, by the first terminal, an identifier of the first key to the access network device. The processing of the access network device before transmitting the downlink sensing signal may further include: receiving the identifier of the first key from the first terminal; and determining the first key based on the identifier of the first key. For example, the identifier of the first key may be the identifier of K_{Upint}, that is, both the first terminal and the access network device determine to use K_{Upint} as the first key.

Optionally, the access network device may determine the first key. The processing of the access network device before transmitting the downlink sensing signal may further include: transmitting an identifier of the first key to the first terminal. The processing of the first terminal may further include: receiving the identifier of the first key from the access network device, and determining the first key based on the identifier of the first key.

The processing of the first terminal before demodulating the reflected signal of the downlink sensing signal may further: calculating a sensing key based on the first key. Correspondingly, the processing of the access network device before transmitting the downlink sensing signal further includes: calculating the sensing key based on the first key.

The key algorithm used by the first terminal and the access network device to calculate the sensing key may be default or specified by a protocol. The relevant description of the key algorithm is the same as that in the above embodiments and will not be repeated here.

In an example where the first key is KgNB, the calculation of the sensing key based on the first key at the first terminal and the access network device may be represented by the following formula: Ksf = KDF (KgNB).

Optionally, the sensing key is calculated based on the first key and at least one of the following parameters: an identifier of the access network device, a second random number, an identifier of the first terminal, or an identifier of the sensing service. The second random number may be denoted as Nonce1.

Still in an example the first key is KgNB, the calculation of the sensing key at the first terminal and the access network device may be represented by the following formula: the calculation of the sensing key may be represented by the following formula: Ksf = KDF(KgNB, "Sensing", sensing service ID, UE ID, gNB ID, Nonce1). The meanings of the other parameters in the formula are the same as those defined in the previous embodiments. Except for the first key KgNB, all the other parameters in the formula are optional.

It should be understood that the above is only an exemplary description of the parameters used for calculating the sensing key. In actual implementation, other parameters may also be used, such as an indicator of the sensing service may also be used to indicate the execution of the sensing service. All parameters that may be used for calculating the sensing key are not exhaustively listed herein.

In this embodiment, the second random number is generated by the access network device. The identifier of the sensing service and/or the second random number at the first terminal may be configured by the access network device.

Specifically, at the first terminal side, before demodulating the reflected signal of the downlink sensing signal, the method further includes: receiving first information, where the first information includes at least one of: an identifier of the sensing service or a second random number. Specifically, receiving the first information may be: receiving the first information from the access network device.

Correspondingly, at the access network device side, before transmitting the downlink sensing signal, the method further includes: transmitting the first information to the one or more nodes, where the first information includes at least one of: the identifier of the sensing service or the second random number. Specifically, transmitting the first information to the one or more nodes may be: transmitting the first information to the first terminal. The first information transmitted by the access network device may be carried in a third request transmitted from the access network device to the first terminal.

In an embodiment, in a single-transmit group-receive downlink sensing scenario, each node in the first group and the access network device all calculate a sensing key.

The first group is a group to which the first terminal belongs. At the side of a plurality of nodes, taking the first terminal as an example, the sensing key is calculated based on a first shared key, where the first shared key is a group key corresponding to the first group to which the first terminal belongs. At the access network device side, the sensing key is calculated based on a second shared key, where the second shared key is the group key corresponding to the first group.

That is, the first shared key at each node and the second shared key at the access network device are essentially the same in this embodiment, which are both the group key corresponding to the first group. Therefore, in the following description of this embodiment, no distinction is made between the first shared key and the second shared key, and the processing of calculating the sensing key based on the group key corresponding to the first group (or simply referred to as the group key) is used for illustration.

Regarding the method in which each node in the first group obtains the group key, it may be negotiated with other nodes in the group through a specified method, or may be pre-configured through other methods, which is not limited in this embodiment.

At the access network device side, the method of obtaining the group key corresponding to the first group may be pre-configured. For example, the group key may be reported by any node in the first group during its communication with the access network device; alternatively, the access network device may obtain the group key corresponding to the first group from an authentication device at the core network side; alternatively, the group key may be configured in the access network device through other methods.

This embodiment does not limit or exhaustively list the specific methods in which the access network device and each node in the first group obtain the group key. As long as the access network device and each node in the first group have the same group key, such implementation falls within the protection scope of this embodiment.

In an example where the group key corresponding to the first group is denoted as Kgroup, the calculation of the sensing key based on the group key at each node in the first group and the access network device may be represented by the following formula: Ksf-g = KDF(Kgroup), where Ksf-g denotes the sensing key.

Optionally, the sensing key is calculated based on the group key corresponding to the first group and at least one of the following parameters: an identifier of the access network device, a second random number, identifiers of a plurality of nodes in the first group, or an identifier of the sensing service.

The second random number may be denoted as Nonce1.

Still in an example where the group key corresponding to the first group is Kgroup, the calculation of the sensing key at each node in the first group and the access network device may be represented by the following formula: Ksf_g = KDF(Kgroup, "Sensing", Nonce1, sensing service ID, gNB ID, gNB1 ID...gNBx ID, UE1 ID...UEy ID), where Ksf_g denotes the sensing key, and gNB ID represents the identifier of the access network device (i.e., the gNB transmitting the downlink sensing signal in this embodiment). "gNB1 ID...gNBx ID, UE1 ID...UEy ID" represents the identifier of each of the plurality of nodes that may be included in the first group. "gNB1 ID...gNBx ID" represents respective identifiers of x access network device nodes in the first group (i.e., the x access network devices that receive and measure the reflected signal of the downlink sensing signal), where x is a positive integer. "UE1 ID...UEy ID" are respective identifiers of y terminal nodes in the first group (i.e., the y terminals that receive and measure the reflected signal of the downlink sensing signal), where UE1 may be the first terminal from the above embodiments, and y is a positive integer. The meanings of other parameters in the formula are the same as those defined in the previous embodiments. Except for the group key Kgroup corresponding to the first group, all the other parameters are optional.

In the above formula, "gNB1 ID...gNBx ID, UE1 ID...UEy ID" is only an exemplary description of a case where the first group includes x access network devices and y terminals. In some possible examples, if the plurality of nodes in the first group are all UEs, the above formula may be modified to exclude IDs of gNB1 to gNBx and only include IDs of UE1 to UEy, that is, Ksf_g = KDF(Kgroup, "Sensing", Nonce1, sensing service ID, gNBID, UE1 ID...UEy ID). In some possible examples, if the plurality of nodes in the first group are all gNBs, the above formula may be modified to exclude IDs of UEs and only include IDs of gNB1 to gNBx, that is, Ksf_g = KDF(Kgroup, "Sensing", Nonce1, sensing service ID, gNB ID, gNB1 ID...gNBx ID).

In this embodiment, the second random number is generated by the access network device. The identifier of the sensing service and/or the second random number at each node in the first group may be configured by the access network device.

Specifically, at the first group side, taking the first terminal as an example, the method further includes: receiving first information, where the first information includes at least one of: an identifier of the sensing service or a second random number. Specifically, receiving the first information may be: receiving the first information from the access network device.

Correspondingly, at the access network device side, before transmitting the downlink sensing signal, the method further includes: transmitting the first information to the one or more nodes, where the first information includes at least one of: the identifier of the sensing service or the second random number. Specifically, transmitting the first information to the one or more nodes may be: transmitting the first information to each of the plurality of nodes in the first group. The first information transmitted by the access network device may be carried in a third request. In this embodiment, the third request may be a group cast message, a multicast message, a broadcast message, or a unicast message.

In some possible implementations, at the access network device side, the downlink sensing signal is generated based on a sensing sequence, and the sensing sequence is calculated based on the sensing key.

The sensing sequence may be a bitstream of a specified length.

The specified length may be default or specified by a protocol.

Alternatively, the specified length may be determined based on the length of the downlink sensing signal. The length of the downlink sensing signal may be related to the number of subcarriers and/or the number of symbols corresponding to the downlink sensing signal. Here, the number of subcarriers and the number of symbols corresponding to the downlink sensing signal may be default or specified by a protocol, which is not limited in this embodiment.

The sensing sequence is calculated based on the sensing key and at least one of the following parameters: a count value or a first random number.

In an embodiment, at the access network device side, the sensing sequence is calculated based on the sensing key and a count value.

The algorithm used for calculating the sensing sequence may be default or specified by a protocol, such as an encryption algorithm (or encryption/decryption algorithm) NEA, and the NEA may be at least one of advanced encryption standard (AES), SNOW third generation (SNOW 3G), or ZUChongzhi (ZUC). For example, the algorithm used to calculate the sensing sequence is one of 128-bit AES algorithm, 128-bit SNOW 3G algorithm, or 128-bit ZUC algorithm. It should be understood that this is only an exemplary description of the algorithm used for calculating the sensing sequence, and not all possible algorithms are limited or exhaustively listed here.

The sensing sequence may be obtained by performing one or more calculations based on the sensing key and the count value.

Each calculation may yield a sequence bitstream (or simply referred to as a bitstream), and the final sensing sequence may be obtained by concatenating the bitstreams obtained from each calculation. The number of bits contained in the sequence bitstream obtained from a single calculation may be related to the algorithm used for calculating the sensing sequence. For example, if the algorithm used for calculating the sensing sequence is one of 128-bit AES algorithm, 128-bit SNOW 3G algorithm, or 128-bit ZUC algorithm, the number of bits contained in the sequence bitstream obtained from one calculation may be 128 bits (128 bits in length).

Furthermore, the aforementioned count value (COUNT) may include one or more count values. The purpose of these one or more count values may be for anti-replay protection.

In the processing of calculating the sensing key, different count values are used for different calculations. A count value used for the first calculation may be referred to as an initial count value. Count values used for other calculations may be obtained based on the count value used in the previous calculation through increment operation. For example, when two calculations are performed successively, the count value used in the latter calculation is obtained by incrementing one to the count value in the previous calculation.

The specific value of the initial count value may be 0 or another numerical value, which is not limited here. For example, the specific value of the initial count value may be default, specified by a protocol, determined by the access network device, or determined by any one of the one or more nodes.

For example, in a sensing scenario involving the access network device and one first terminal, the initial count value may be equal to a NAS count value (e.g., the number of times the first terminal has established a NAS connection), or may be equal to the number of times the sensing service has been performed, or the like.

As another example, if the initial count value is determined by the access network device, the processing of the access network device before transmitting the downlink sensing signal may further include: transmitting the initial count value to the one or more nodes.

As yet another example, the initial count value is determined by any one of the one or more nodes.

For example, in a single-transmit single-receive downlink sensing scenario involving the access network device and one first terminal, the processing of the first terminal before receiving the reflected signal of the downlink sensing signal may further include: transmitting the initial count value to the access network device.

For example, in a single-transmit group-receive downlink sensing scenario, taking the first terminal in the first group as an example, it may also be that the first terminal determines the initial count value and transmits the initial count value to the access network device. Furthermore, initial count values at other nodes except the first terminal in the first group may be configured by the first terminal or may be configured by the access network device. For example, the nodes other than the first terminal may receive the initial count value from the first terminal or receive the initial count value from the access network device.

Regarding the number of calculations required for calculating the sensing sequence, it may be related to the specified length of the sensing sequence. That is, since the eventually generated sensing sequence needs to satisfy the requirement of the specified length of the sensing sequence, the condition for terminating the processing (or terminating the calculation) may be that the total number of bits contained in all currently generated sequence bitstreams is not less than the specified length of the sensing sequence.

Specifically, the sensing sequence may be calculated based on the sensing key, the count value, and the length, where the length refers to the specified length of the sensing sequence. In an example where any execution of the calculation processing is the i-th calculation, the processing of calculating the sensing sequence may include: calculating the i-th sequence bitstream based on the sensing key and the i-th count value; and in a case where the total number of bits contained in the currently obtained i sequence bitstreams is not less than the specified length of the sensing sequence, generating the sensing sequence based on the currently obtained i sequence bitstreams, where i is an integer greater than or equal to 1. The currently obtained i sequence bitstreams refer to all i sequence bitstreams that have been generated at present. In a case where i is equal to 1, and the i-th count value may be the initial count value.

In addition, in a case where the total number of bits contained in the currently obtained i sequence bitstreams is less than the specified length of the sensing sequence, the processing may further include: incrementing the i-th count value by one to obtain the (i+1)-th count value, calculating the (i+1)-th sequence bitstream based on the sensing key and the (i+1)-th count value, and determining whether the total number of bits contained in the currently obtained (i+1) sequence bitstreams is less than the specified length of the sensing sequence. This process is repeated until the total number of bits contained in all currently obtained sequence bitstreams is not less than the specified length of the sensing sequence. The sensing sequence is generated based on all currently obtained sequence bitstreams.

Generating the sensing sequence based on the currently obtained i sequence bitstreams may include: concatenating all bits of all the currently obtained i sequence bitstreams to form the sensing sequence. The concatenation may be performed in the order of generation, which is not limited here.

The processing of calculating the sensing sequence is described by way of an example, and the processing may include: calculating the 1-st sequence bitstream based on the sensing key and the initial count value; in a case where the number of bits contained in the 1-st sequence bitstream is not less than the specified length of the sensing sequence, determining the 1-st sequence bitstream as the sensing sequence; in a case where the number of bits contained in the 1-st sequence bitstream is less than the specified length of the sensing sequence, incrementing the initial count value by one to obtain an updated count value; calculating the 2-nd sequence bitstream based on the sensing key and the updated count value; and in a case where the total number of bits contained in the first two sequence bitstreams is not less than the specified length of the sensing sequence, determining the first two sequence bitstreams as the sensing sequence. In addition, the processing further includes: in a case where the total number of bits contained in the first two sequence bitstreams is less than the specified length of the sensing sequence, incrementing the count value by one again to obtain a new updated count value, continuing to calculate the 2-nd sequence bitstream based on the sensing key and the updated count value, and repeating this process until a sensing sequence satisfying the specified length requirement is obtained.

Specifically, with reference to FIG. 5 for an exemplary description, the calculation processing of the sensing sequence may include: passing the count value COUNT (32 bits, starting from 0) and a sensing key Ksf from a 5GS key update system to an NEA module to output a set of sequence bitstreams (seq_sensing). If the currently output sequence bitstream does not reach the specified length (concisely illustrated as "length" in FIG. 5), COUNT is incremented by one, and based on this COUNT and Ksf, the NEA module performs calculation again to output another set of sequence bitstreams (seq_sensing). This process is repeated until a sequence bitstream that reaches the specified length is obtained, and all the generated sequence bitstreams are combined to form the sensing sequence. Here, the number of sets of sequence bitstreams (seq_sensing) or the number of calculations may be determined based on the length of the downlink sensing signal (e.g., PRS). In addition, when COUNT reaches its maximum value, it may roll over to 0.

Optionally, before COUNT rolls over to 0, the corresponding sensing key Ksf may be updated to ensure that each output sequence bitstream (seq_sensing) is different. The method for updating the sensing key is similar to the processing of calculating the sensing key in the above embodiments, and the only difference is that updating the sensing key may involve updating the generation parameters corresponding to the sensing key, such as updating the second random number. The device that updates the second random number is the same as the device that generates the second random number in the above embodiments, and the method for configuring or transmitting the updated second random number is also similar to the method for configuring or transmitting the second random number in the above embodiments. For example, if the first terminal (or the plurality of nodes in the first group) and the access network device both calculate the sensing key, the access network device may generate a new second random number and transmit the new second random number to the first terminal (or to the plurality of nodes in the first group). If the first terminal and the core network device both calculate the sensing key, the core network device may generate a new second random number and transmit the new second random number (possibly through the access network device) to the first terminal, which is not repeated here.

It should be understood that in the above illustrative description, the sensing key denoted as Ksf is used as an illustrative example In a scenario where the receiving side is the first group, Ksf illustrated in FIG. 5 may be replaced with Ksf_g. The specific calculation method is the same as the example corresponding to FIG. 5, which is not repeated here.

Optionally, in the processing of calculating the sensing sequence, in addition to using at least one of the aforementioned sensing key, count value, or length, at least one of the following parameters may also be used: a bearer ID (identifier) or a direction indicator. The bearer ID may also be denoted as BEARER. The direction indicator (which may be denoted as direction flag or DIRECTION) is used to identify uplink or downlink.

In an embodiment, at the access network device side, the sensing sequence is calculated based on the sensing key and a first random number.

Specifically, the algorithm for the sensing sequence may be a hash algorithm (i.e., a hash function). That is, the method for calculating the sensing sequence may include: obtaining a hash sequence calculated from the sensing key and the first random number by using a hash function, and determining the hash sequence as the sensing sequence. For example, the calculation of the sensing sequence may be represented by the following formula: seq_sensing = HKsf(Nonce2), or it may be represented as seq_sensing = Hash(Ksf, Nonce2), where Hash() or H() may both represent a hash function, Ksf is the sensing key, and Nonce2 is the first random number. The hash function used by the hash algorithm may be configured according to the actual situation, for example, the hash function may be SHA-1, SHA-256, or the like. The hash function is not limited or exhaustively listed here.

In this embodiment, the processing of the access network device before transmitting the downlink sensing signal may further include: transmitting the first random number to the one or more nodes, where the first random number is generated by the access network device. In a single-transmit single-receive downlink sensing scenario, the one or more nodes may only include the first terminal. In a single-transmit group-receive downlink sensing scenario, the one or more nodes include the plurality of nodes in the first group.

The method for generating the first random number at the access network device may be determined according to the actual situation. For example, the first random number may be generated by the access network device using a pseudo-random number generator (PRNG), or it may be generated through other methods. All possible generation methods for the first random number are not limited or exhaustively listed here.

In some embodiments, at the access network device side, the downlink sensing signal is generated based on the sensing sequence.

The specific method for generating the downlink sensing signal at the access network device may include: extracting K bits from the sensing sequence for the m-th time, modulating the K bits based on a specified modulation scheme to obtain the m-th modulation symbol; and mapping the m-th modulation symbol to the m-th downlink sensing signal resource according to a mapping order, until all downlink sensing signal resources are fully mapped.

Here, m is a positive integer, and K may be an integer greater than or equal to 2. The value of K is related to the specified modulation scheme.

Extracting K bits from the sensing sequence for the m-th time may refer to: determining a starting position of the m-th extraction operation based on a specified extraction order and/or an ending position of the K bits extracted in the (m-1)-th extraction; and extracting K bits from the sensing sequence for the m-th time based on the extraction position of the m-th extraction operation.

The specified extraction order may be configured according to the actual situation, for example, the extraction may be performed sequentially starting from the least significant bit of the 1-st octet of the sensing sequence. For example, determining the starting position of the m-th extraction operation based on the specified extraction order and/or the ending position of the K bits extracted in the (m-1)-th extraction may include: in a case where m is equal to 1, a starting position of the 1-th first extraction operation may be the least significant bit of the 1-st octet of the sensing sequence; in a case where m is greater than 1, the starting position of the m-th extraction operation is a position of the 1-st bit following the K bits extracted from the sensing sequence in the previous extraction.

The specified modulation scheme may be configured according to the actual situation, for example, it may be quadrature phase shift keying (QPSK).

The above embodiments have explained that the value of K is related to the specified modulation scheme. If the specified modulation scheme is QPSK, since each modulation requires 2 bits, K may be equal to 2. For example, the modulation symbol may also be interchangeably referred to as a QPSK symbol or a QPSK modulation symbol. In an example where the specified modulation scheme is QPSK modulation and K is equal to 2, the processing of performing QPSK modulation on 2 bits to obtain the m-th modulation symbol may be represented by the following formula: $r \left(m\right) = \frac{1}{\sqrt{2}} \left(1-2c\left(2m\right)\right) + j \frac{1}{\sqrt{2}} \left(1-2c\left(2m+1\right)\right)$, where c(2m) and c(2m+1) are respective specific values of the 2 bits, and r(m) denotes the m-th modulation symbol.

The downlink sensing signal resources may include time-domain resources and frequency-domain resources. The mapping order may be configured according to the actual situation. Preferably, the mapping order may be an order from earlier to later (or from first to last) in the time domain and from low-frequency to high-frequency in the frequency domain. For example, mapping the m-th modulation symbol to the m-th downlink sensing signal resource according to the mapping order may be: starting from the 1-st subcarrier of the 1-st symbol of the 1-st resource (from low-frequency to high-frequency), sequentially mapping the m-th modulation symbol to a corresponding time-frequency grid (i.e., the m-th downlink sensing signal resource).

After the mapping of modulation symbols is completed through the above processing, the downlink sensing signal resources are generated. Furthermore, a downlink sensing signal resource set may be generated from the downlink sensing signal resources based on auxiliary data of the downlink sensing signal.

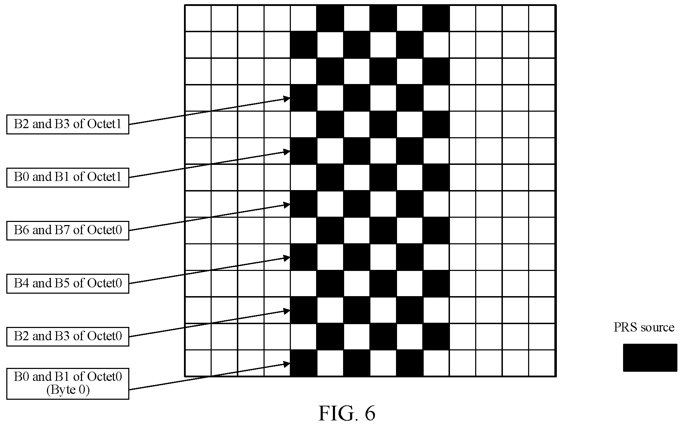

With reference to FIG. 6, an exemplary description is provided where a PRS is used as an example of the downlink sensing signal. In this example, 128 bits (a sequence bitstream), i.e., 16 octets, generated by one execution of the NEA algorithm (taking AES128 as an example) are used. Starting from the least significant bit of Octet0 (octet 0, i.e., the 1-st octet), 2 bits are taken sequentially: B0, B1; B2, B3; B4, B5; B6, B7, to generate respective QPSK symbols, and the QPSK symbols are then sequentially mapped to the 1-st subcarrier, the 2-nd subcarrier, and the 3-rd subcarrier of the 1-st symbol of the 1-st PRS resource. Starting from the least significant bit of Octet1 (the 2-nd octet), 2 bits are taken sequentially: B0, B1; B2, B3; B4, B5; B6, B7, to generate respective QPSK symbols, and the QPSK symbols are then sequentially mapped to the 4-th subcarrier, the 5-th subcarrier, and the 6-th subcarrier of the 1-st symbol of the 1-st PRS resource. This process continues until all subcarriers of the 1-st symbol of the PRS are fully mapped. Then, all subcarriers of the 2-nd symbol are mapped, and so on, until all resources of the PRS are fully mapped.

In some possible implementations, in a single-transmit single-receive sensing scenario, the processing of the first terminal further includes: calculating a sensing sequence based on the sensing key; obtaining first sensing data based on the sensing sequence and the reflected signal of the downlink sensing signal; and reporting the first sensing data.

In a single-transmit group-receive downlink sensing scenario, the processing of each node in the first group is the same as that of the first terminal. Therefore, still taking the first terminal as an example, the processing of the first terminal after receiving the reflected signal of the downlink sensing signal further includes: obtaining the first sensing data based on the sensing sequence and the reflected signal of the downlink sensing signal, where the sensing sequence is calculated based on the sensing key.

Whether in a single-transmit single-receive downlink sensing scenario or in a single-transmit group-receive downlink sensing scenario, the processing of obtaining the first sensing data performed by the nodes at the receiving side is the same as that performed by the first terminal. Therefore, in the following embodiments, the processing of the first terminal on the reflected signal of the downlink sensing signal will be described as an example, and the processing of each node in the single-transmit group-receive downlink sensing scenario on the reflected signal of the downlink sensing signal will not be repeated here.

The processing of calculating the sensing sequence based on the sensing key may be performed either after the first terminal receives the reflected signal of the downlink sensing signal or before the first terminal receives the reflected signal of the downlink sensing signal, which is not limited here. As long as the calculation of the sensing sequence at the first terminal is completed before the first terminal demodulates the reflected signal of the downlink sensing signal, such implementation falls within the protection scope of the present application.

The processing of obtaining the first sensing data based on the sensing sequence and the reflected signal of the downlink sensing signal, as well as the processing of reporting the first sensing data, are both performed after the reflected signal of the downlink sensing signal is received.

Calculating the sensing sequence based on the sensing key includes: calculating the sensing sequence based on the sensing key and at least one of the following parameters: a count value or a first random number.

Optionally, the sensing sequence is calculated based on the sensing key and the count value.

At the first terminal side, the sensing sequence is also obtained by performing one or more calculations based on the sensing key and the count value. The algorithm used for calculating the sensing sequence is the same as that used by the access network device, and the relevant descriptions regarding the count value, the initial count value, etc., are also the same as those for the access network device, and thus will not be repeated.

Optionally, the sensing sequence is calculated based on the sensing key and the first random number.

At the first terminal side, a hash algorithm (i.e., a hash function) may be used as the algorithm for the sensing sequence. As long as the same hash function as that used by the access network device is employed, such implantation falls within the protection scope of this embodiment.

In this embodiment, the processing of the first terminal may further include: receiving the first random number from the access network device. As long as the processing of the first terminal for receiving the first random number from the access network device is before calculating the sensing sequence, such implementation falls within the protection scope of this embodiment, and the timing of the processing is not limited herein.

It should be noted that the specific method used by the first terminal (or each node in the first group) and the access network device to calculate the sensing sequence may be default or specified by a protocol. For example, it may be default to calculate the sensing sequence using the sensing key and the count value, or it may be specified by a protocol that the sensing key and the first random number are used to calculate the sensing sequence, or the like.

Alternatively, the specific method used by the first terminal (or each node in the first group) to calculate the sensing sequence may be indicated by the access network device. For example, the processing of the first terminal may further include: receiving information used to indicate the method for calculating the sensing sequence from the access network device. For example, the information may indicate that the sensing sequence is calculated by using the sensing key and the count value, or indicate that the sensing sequence is calculated by using the sensing key and the first random number.

Alternatively, the first terminal (or any node in the first group, still taking the first terminal as an example) may determine the method for calculating the sensing sequence, and transmit information used to indicate the method for calculating the sensing sequence to the access network device before receiving the reflected signal of the downlink sensing signal. In this case, in a single-transmit group-receive downlink sensing scenario, the other nodes may receive information used to indicate the method for calculating the sensing sequence from the first terminal or the access network device before receiving the reflected signal of the downlink sensing signal.

Obtaining the first sensing data based on the sensing sequence and the reflected signal of the downlink sensing signal may include: calculating a modulation symbol based on the sensing sequence, calculating a reference signal based on the modulation symbol; and obtaining the first sensing data based on the reference signal and the reflected signal of the downlink sensing signal.

Here, calculating the modulation symbol based on the sensing sequence and calculating the reference signal based on the modulation symbol may include: extracting K bits from the sensing sequence for the m-th time, modulating the K bits based on a specified modulation scheme to obtain the m-th modulation symbol; and mapping the m-th modulation symbol to the m-th downlink sensing signal resource according to a mapping order until all downlink sensing signal resources are fully mapped, thereby obtaining the reference signal used for demodulating the reflected signal.

Here, m is a positive integer, and K is an integer greater than or equal to 2. The value of K is related to the specified modulation scheme.

The descriptions related to the processing of extracting K bits from the sensing sequence for the m-th time, the specified modulation scheme, the specific calculation method of the modulation, ant the mapping order, are consistent with the relevant description at the access network device, and thus will not be repeated. Since the reference signal here is calculated using the same sensing sequence and the same calculation method as those used by the access network device, the reference signal obtained should be the same as the downlink sensing signal transmitted by the access network device in theory.

Obtaining the first sensing data based on the reference signal and the reflected signal of the downlink sensing signal may refer to: calculating a first channel estimation value based on a reference signal corresponding to a first resource and a reflected signal of a downlink sensing signal received on the first resource; and calculating the first sensing data based on the first channel estimation value. Related parameters in the first channel estimation value include at least one of: amplitude, frequency, or phase.

Calculating the first sensing data based on the channel estimation value may refer to: calculating the first sensing data using one or more algorithms according to different sensing requirements (e.g., different sensing types and/or different sensing services) and/or a default approach. This embodiment does not limit the various possible algorithms.

The first resource may include a first time-domain resource and a first frequency-domain resource. The first time-domain resource may be a specific time, a time period, or a time-domain range in which a specific time t is located. The first frequency-domain resource may be a specified subcarrier or a subcarrier at a specified frequency f. For example, suppose the first resource is a subcarrier at time t and frequency f, the downlink sensing signal transmitted by the access network device on the first resource is denoted as x(t, f), and the reflected signal generated by the downlink sensing signal being reflected by the sensing target is denoted as y(t, f). At the first terminal, since the reference signal is calculated based on the same sensing sequence and using the same calculation method as those used by the access network device, theoretically, the reference signal on the first resource is the same as the downlink sensing signal transmitted by the access network on the first resource. Therefore, the reference signal on the first resource is also denoted as x(t, f). On the first resource, that is, on the subcarrier at time t and frequency f, the first terminal may calculate CSI as $H \left(t, f\right) = \frac{y \left(t, f\right)}{x \left(t, f\right)}$, where H() denotes the first channel estimation value which may be included in the CSI. For example, the CSI amplitude may be used to estimate the breathing rate; the CSI phase transformation may be used to estimate the breathing rate; the CSI Doppler information may be used to infer indoor human movement trajectories; the CSI dynamic phase variations may be used for gesture recognition; and the combination of CSI amplitude and phase may be used for human activity detection, among other applications.

The first terminal reporting the first sensing data may include one of: reporting, by the first terminal the first sensing data to the core network device; or reporting, by the first terminal, the first sensing data to the access network device.

Optionally, in a single-transmit single-receive downlink sensing scenario, the SF transmits a sensing service request for triggering a sensing service to the core network device. In this case, the core network device may directly transmit a second request to the first terminal. Subsequently, the first terminal calculates the sensing key by using a second key shared with the core network device and performs subsequent processing. In this scenario, the terminal may directly report the sensing data of the first terminal to the core network device. Correspondingly, the processing of the core network device may further include: receiving the first sensing data from the first terminal. After receiving the first sensing data of the first terminal, the core network device may further report the first sensing data and the identifier of the sensing service to the SF.

Optionally, in a single-transmit single-receive downlink sensing scenario, the SF transmits a sensing service request for triggering a sensing service to the core network device. In this case, the core network device may transmit a first request to the access network device, and the access network device transmits a third request to the first terminal. If the first terminal receives the third request from the access network device, the first terminal reports the first sensing data to the access network device.

Correspondingly, the processing of the access network device after transmitting the downlink sensing signal may include: receiving the first sensing data from the one or more nodes; and reporting the first sensing data of the one or more nodes. In this example, as there is only one node, the processing of the access network device specifically involves: receiving the first sensing data from the first terminal, and reporting the first sensing data of the first terminal to the core network device.

The processing of the core network device may include: receiving the first sensing data of the first terminal from the access network device. After receiving the first sensing data from the first terminal, the core network device may further report the first sensing data of the first terminal and the identifier of the sensing service to the SF.

Optionally, in a single-transmit single-receive downlink sensing scenario, the SF transmits a sensing service request for triggering a sensing service to the access network device, and the access network device transmits a third request to the first terminal. If the first terminal receives the third request from the access network device, the first terminal reports the first sensing data to the access network device.

Correspondingly, the processing of the access network device after transmitting the downlink sensing signal may include: receiving the first sensing data from the one or more nodes; and reporting the first sensing data of the one or more nodes. In this example, as there is only one node, the processing of the access network device specifically involves: receiving the first sensing data from the first terminal and reporting the first sensing data of the first terminal to the SF.

Optionally, in a single-transmit group-receive downlink sensing scenario, each of the plurality of nodes in the first group reports its own first sensing data.

Taking the first terminal in the first group as an example, the first terminal may report the first sensing data to the access network device. Correspondingly, the processing of the access network device after transmitting the downlink sensing signal may include: receiving the first sensing data from the plurality of nodes (e.g., a plurality of terminals) in the first group; and reporting the first sensing data of the plurality of nodes. In this scenario, the access network device may directly receive a sensing service request from the SF, and thus, the access network may directly report the first sensing data of the plurality of nodes to the SF.

If the first group includes a sensing access network device, and the SF triggers the sensing access network device to perform sensing, the sensing access network device may directly report the first sensing data to the SF.

If the first group includes a sensing access network device, and an access network device (the access network that initiates sensing) triggers the sensing access network device to perform sensing, the sensing access network device may report the first sensing data to the access network device (the access network that initiates sensing).

In some possible implementations, the access network device may also receive and measure a reflected signal of the downlink sensing signal.

For example, after the access network device transmits the downlink sensing signal, the method further includes: receiving and measuring the reflected signal of the downlink sensing signal to obtain second sensing data; and reporting the second sensing data.

Receiving and measuring the reflected signal of the downlink sensing signal to obtain the second sensing data may refer to: calculating a second channel estimation value based on a downlink sensing signal corresponding to a second resource and a reflected signal of the downlink sensing signal received on the second resource; and calculating the second sensing data based on the second channel estimation value. Related parameters in the second channel estimation value include at least one of: amplitude, frequency, or phase.

The second resource may include a second time-domain resource and a second frequency-domain resource. The second resource may be the same as or different from the first resource. The relevant description of the second resource is similar to that of the first resource and is not repeated here. The calculation method for the second channel estimation value and the second sensing data is similar to that for the first channel estimation value and the first sensing data in the above embodiments, and is also not repeated here.

The access network device reporting the second sensing data may involve: reporting, by the access network device, the second sensing data to the core network device. Correspondingly, the processing of the core network device further includes: receiving the second sensing data from the access network device.

Alternatively, the access network device reporting the second sensing data may involve: reporting, by the access network device, the second sensing data to the SF.

In the following, the communication method provided in the present application will be described through several embodiments.

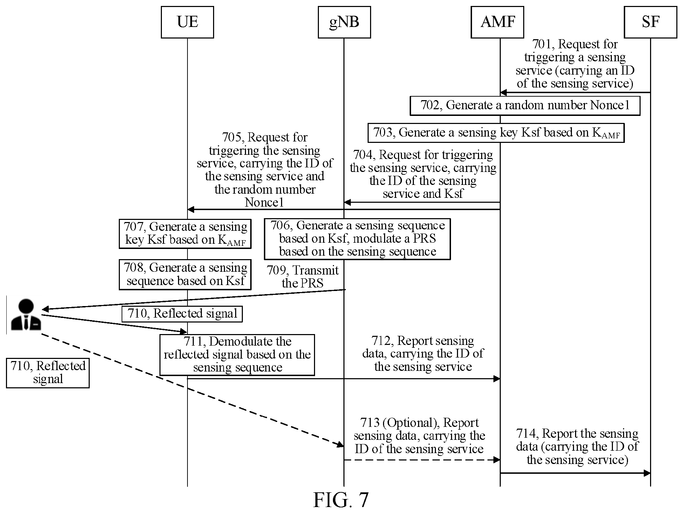

In Embodiment 1, in a non-roaming scenario, the SF is located in a serving PLMN, the AMF is the sensing anchor function, and the AMF may apply a specific solution based on the key K_{AMF} in the key architecture. In this embodiment, the NAS-related key K_{AMF} is selected as the source of the sensing key. The gNB (or the gNB associated with a sensing service) and the UE (or the sensing UE) use the same generation method to generate the same PRS signal. Specifically, with reference to FIG. 7, the following steps are included.

In S701, the SF transmits a request for triggering a sensing service (referred to as a sensing service request) to the AMF, and the request carries an ID of the sensing service.

In S702, the AMF generates a random number Nonce1 (i.e., the second random number in the above embodiments).

In S703, the AMF generates a sensing key Ksf based on K_{AMF}. Here, the random number Nonce1 may be used in the calculation of the sensing key Ksf. Since the specific processing of calculating the sensing key has been described in detail in the above embodiments, it will not be repeated here.

In S704, the AMF transmits a request for triggering the sensing service to the gNB associated with the sensing service, and the request carries the ID of the sensing service and Ksf

In S705, the AMF transmits a request for triggering the sensing service to the sensing UE, and the request carries the ID of the sensing service and the random number Nonce1.

In S706, the gNB generates a sensing sequence based on Ksf, and modulates a PRS based on the sensing sequence. The sensing sequence may consist of one or more sequence bitstreams (seq_sensing). The specific generation method of the sensing sequence has been described in detail in the above embodiments and will not be repeated here. Here, S706 and S705 may be performed in any order, for example, S706 may be performed before S705, or vice versa.

In S707, the UE generates the sensing key Ksf based on K_{AMF}, using the same generation method as the AMF.

In S708, the UE generates a sensing sequence based on Ksf. The generation method is the same as that used by the gNB and will not be repeated here.

In S709, the gNB transmits a PRS sensing signal.

In S710, the sensing target reflects the PRS sensing signal, and the UE and the sensing gNB (optional, in a self-transmit self-receive scenario) receive a reflected signal.

In S711, the UE demodulates the reflected signal based on the sensing sequence. Specifically, the UE may generate PRS' (which may be referred to as a reference signal) based on the sensing sequence, and demodulate the reflected signal based on the PRS'. The generation method of PRS' is the same as the method used by a gNB (an initiating gNB) to generate the PRS, as the UE and the gNB have the same seq_sensing. The specific demodulation scheme is the same as that in the above embodiments and is not repeated here.

In S712, the UE reports the sensing data to the AMF, and the sensing data carries the ID of the sensing service.

In S713 (optional), the gNB may also demodulate the reflected signal based on the sensing sequence and report the sensing data (carrying the ID of the sensing service) to the AMF. The specific implementation process is similar to that of the UE and is not repeated here.

In S714, the AMF reports the sensing data (carrying the ID of the sensing service) to the SF.

Optionally, in the above S704, when the AMF transmits the request for triggering the sensing service to the gNB associated with the sensing service, the request may carry the ID Ksf of the sensing service and the random number Nonce1.

In this case, the AMF does not perform S705; instead, the gNB transmits the request for triggering the sensing service to the UE, which carries the ID of the sensing service and the random number Nonce1. As long as the timing for the gNB to transmit the request for triggering a sensing service to the UE is before S707, such implementation falls within the protection scope of this embodiment.

Furthermore, in this case, S712 performed by the UE may be replaced with the UE reporting the sensing data to the gNB, and the gNB reports the sensing data of the UE together with the identifier of the sensing service to the AMF.

Optionally, the steps S707 and S709 may be performed in any order. For example, S709 may be performed before S707, that is, S709 is performed first. After receiving the reflected sensing signal, the UE may perform steps S707 and S708 to generate the sensing sequence (including one or more seq_sensing) using Ksf.

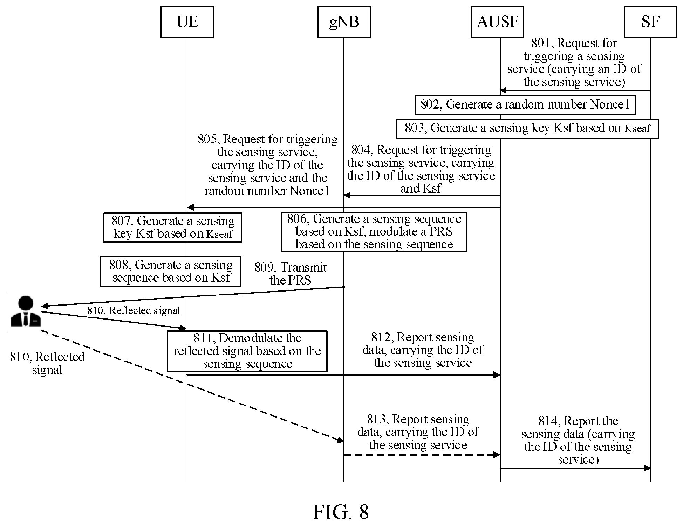

In Embodiment 2, in a roaming scenario, the SF is located in a home PLMN (HPLMN), and the AUSF is the sensing anchor function, which may be combined based on the key Kseaf stored in the AUSF. In this embodiment, messages between the AUSF and the UE, as well as messages between the AUSF and the gNB, may be forwarded via the AMF. Since the AMF only serves the function of forwarding message and is therefore not described as an example. Specifically, with reference to FIG. 8:

In S801, the SF transmits a request for triggering a sensing service to the AUSF, and the request carries an ID of the sensing service.

In S802, the AUSF generates a random number Nonce1.

In S803, the AUSF generates a sensing key Ksf based on Kseaf. The random number Nonce1 may be used in the calculation of this sensing key Ksf. Since the specific processing of calculating the sensing key has been described in detail in the above embodiments, it will not be repeated here.

In S804, the AUSF transmits a request for triggering the sensing service to the gNB associated with the sensing service, and the request carries the ID of the sensing service and Ksf.

In S805, the AUSF transmits a request for triggering the sensing service to the sensing UE, and the request carries the ID of the sensing service and the random number Nonce1.

S806 is the same as the processing of S706 in the above Embodiment 1 and is not repeated here. Here, S806 and S805 may be performed in any order, for example, S806 may be performed before S805, or vice versa.

In S807, the UE generates the sensing key Ksf based on Kseaf, using the same generation method as the AUSF.

S808 to S811 are the same as S708 to S711 in the above Embodiment 1 and are not repeated here.

In S812, the UE transmits the sensing data to the AUSF, and the sensing data carries the ID of the sensing service.

In S813 (optional), the gNB may also demodulate the reflected signal based on the sensing sequence and report the sensing data (carrying the ID of the sensing service) to the AUSF. The specific implementation process is similar to that of the UE and is not repeated here.

In S814, the AUSF reports the sensing data (carrying the ID of the sensing service) to the SF.

Optionally, in the above S804, when the AUSF transmits the request for triggering the sensing service to the gNB associated with the sensing service, the request may carry the ID Ksf of the sensing service and the random number Nonce1.

In this case, the AUSF does not perform S805; instead, the gNB transmits the request for triggering the sensing service to the UE, which carries the ID of the sensing service and the random number Nonce1. As long as the timing for the gNB to transmit the request for triggering a sensing service to the UE is before S807, such implementation falls within the protection scope of this embodiment.

Furthermore, in this case, S812 performed by the UE may be replaced with the UE reporting the sensing data to the gNB, and the gNB reports the sensing data of the UE together with the identifier of the sensing service to the AUSF.

Optionally, the steps S807 and S809 may be performed in any order. For example, S809 may be performed before S807, that is, S809 is performed first. After receiving the reflected sensing signal, the UE may perform steps S807 and S808 to generate the sensing sequence (including one or more seq_sensing) using Ksf.

It should be noted that Embodiment 1 and Embodiment 2 are only exemplary description. In actual implementation, the AMF or the AUSF in Embodiment 1 or Embodiment 2 may be replaced with other core network devices, such as one of an AKMA server, a GBA server, etc. Correspondingly, the key used for calculating the sensing key in Embodiment 1 or Embodiment 2 may be replaced with one of K_{AKMA}, K_{AF}, K_{sNAF} ,or the like, which is not repeated here.

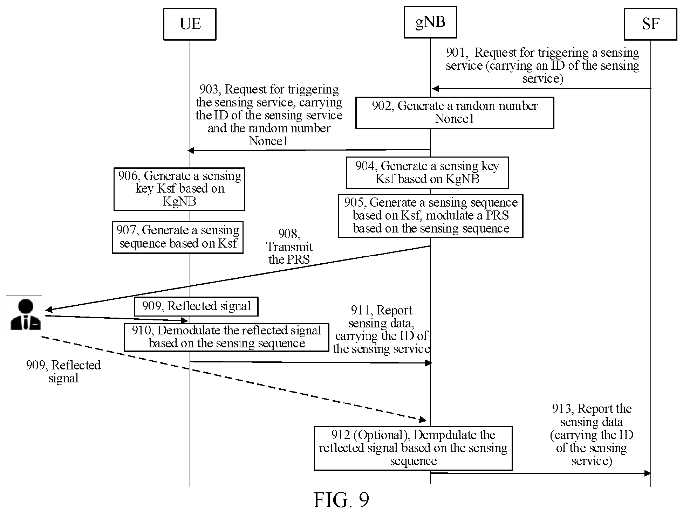

In Embodiment 3, in a non-roaming scenario, the PDCP/UPF serves as an anchor function of a sensing service. The specific solution for calculating the sensing key Ksf based on the KeNB (or KgNB) key shared between the gNB and the UE is illustrated in FIG. 9, which includes following steps.

In S901, the SF transmits a request for triggering a sensing service to the gNB associated with the sensing service, and the request carries an ID of the sensing service. A message between the gNB and the SF may be forwarded via the UPF/AMF. Since the AMF/UPF serves a forwarding function, the AMF/UPF is not illustrated in FIG. 9.

In S902, the gNB generates a random number Nonce1.

In S903, the gNB transmits a request for triggering the sensing service to the UE, and the request carries the ID of the sensing service and the random number Nonce1. Optionally, this message may also be transmitted before transmitting a sensing signal PRS (e.g., at any time before step S907).

In S904, the gNB generates a sensing key Ksf based on KgNB. The random number Nonce1 may be used in the calculation of Ksf, and the specific calculation method is the same as that in the above embodiments and is not repeated here.

In S905, the gNB generates a sensing sequence based on Ksf, and modulates the PRS based on the sensing sequence. The sensing sequence may consist of one or more sequence bitstreams (seq_sensing). The specific method for generating the sensing sequence has been detailed in the above embodiments and is not repeated here.

In S906, after receiving the above message, the UE generates the sensing key Ksf based on KgNB. The method for generating the sensing key Ksf at the UE side is the same as that at the gNB.

In S907, the UE generates the sensing sequence based on Ksf. The method for the UE to generate the sensing sequence of the UE is the same as that for the gNB and is not repeated here. The UE and the gNB have the same sensing sequence (including one or more bitstreams (seq_sensing)).

Optionally, the UE may also generate the sensing sequence based on Ksf after receiving the reflected signal.

S908 to S910 are the same as S709 to S711 in Embodiment 1 and are not repeated again.

In S911, the UE reports the sensing data to the gNB, and the sensing data carries the ID of the sensing service.

In S912 (optional), after receiving the reflected sensing signal, the gNB demodulates the reflected signal (optional, in a self-transmit self-reception scenario) by using seq_sensing.

In S913, the gNB reports the sensing data to the SF, and the sensing data carries the ID of the sensing service. The messages between the gNB and the SF may be forwarded through the UPF, and the UPF serves a forwarding function. The UPF may also process the sensing data locally.

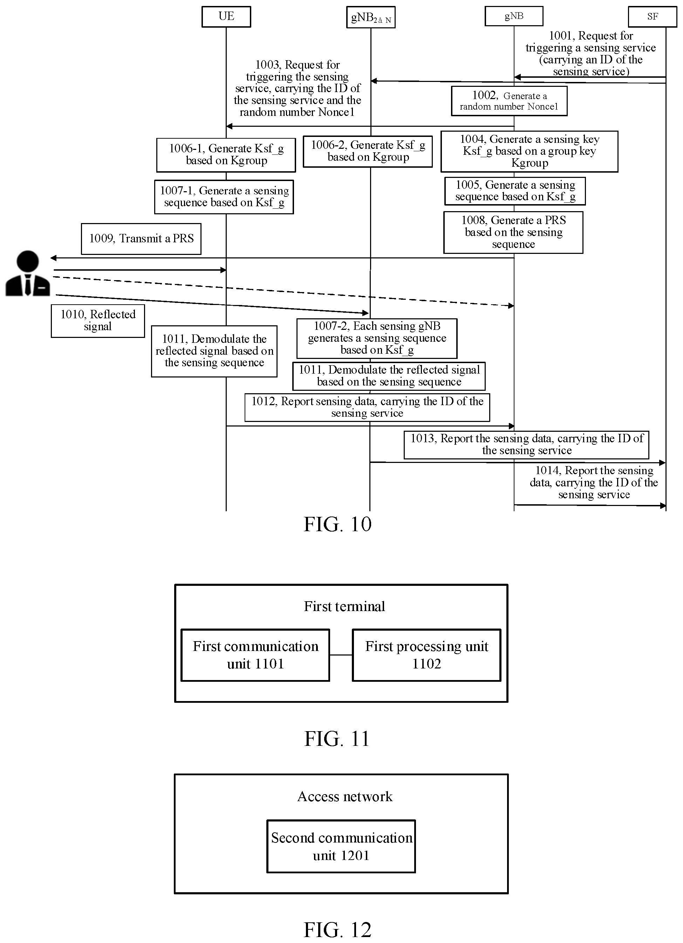

In Embodiment 4, in a group scenario non-roaming, the PDCP/UPF serves as an anchor function of a sensing service, and a key Kgroup is combined in the specific solution. In this group scenario, one or more UEs and/or one or more gNBs may receive the reflected sensing signal (thus a group is simply referred to as a receiving group). Both modulation and demodulation of the sensing signal are based on a group key, and the same group key (possibly combined with other parameters such as an ID of the sensing service) may be used to generate the same sequence. The receiving group (i.e., the first group) illustrated in FIG. 10 may include: a UE, a sensing gNB2, ..., a sensing gNBn (concisely illustrated as gNB2...n in FIG. 10). Here, gNB2...n may also be sensing UE2...n. FIG. 10 does not limit types of devices that may be included in the group. Specifically, as illustrated in FIG. 10, the processing may include following steps.

In S1001, the SF transmits a request for triggering a sensing service to gNBs associated with the sensing service (which may include an initiating gNB used for transmitting a downlink sensing signal and the sensing gNB2,..., gNBn in the receiving group), and the request carries the ID of the sensing service. Messages between the gNBs and the SF may be forwarded via the UPF/ an AMF, and the AMF/UPF serves a forwarding function.

In S1002, the gNB (the initiating gNB) generates a random number Nonce1.

In S1003, the gNB (the initiating gNB) transmits a request for triggering the sensing service to the UE, and the request carries the ID of the sensing service and the random number Nonce1. It should be understood that the gNB (the initiating gNB) may further transmit a message carrying the ID of the sensing service and the random number Nonce1 to the sensing gNB2,..., gNBn in the receiving group, which is not illustrated in FIG. 10 for brevity.

Optionally, the above message used to transmit the request for triggering the sensing service to the UE and the message used to transmit carrying the ID of the sensing service and the random number Nonce1 transmitted to the sensing gNB2,..., gNBn in the receiving group may also be transmitted before the gNB transmits the sensing signal.

In S1004, the gNB (the initiating gNB) generates a sensing key Ksf_g (also referred to as a group sensing key) based on a group key Kgroup. For example, Ksf_g = KDF(Kgroup, "Sensing", Nonce, sensing service ID, UE ID, gNB ID, gNB2...n ID or UE2...n ID), where all parameters except Kgroup are optional. Kgroup is a group key shared between sensing-related gNBs and UEs through other technologies, for example, a group key sharing method specified in the existing V2X technology 3GPP TS 33.836 may be utilized.

In S1005, the gNB (the initiating gNB) generates a sensing sequence (including one or more bitstreams (seq_sensing)) based on Ksf_g. The specific generation method is the same as that in the above embodiments and is not repeated here.

In S1006-1, after receiving the above message, the UE generates Ksf_g based on Kgroup. The specific generation method of Ksf_g is the same as that of the gNB (the initiating gNB).

In S1007-1, the UE generates a sensing sequence based on Ksf_g.

In S1006-2, each sensing gNB generates Ksf_g based on Kgroup. The specific generation method of Ksf_g is the same as that of the gNB (the initiating gNB).

In S1007-2, each sensing gNB generates a sensing sequence based on Ksf_g.

Optionally, S1006-1 and S1007-1 may be performed at any time before S1011.

Optionally, S1006-2 and S1007-2 may be performed at any time before S1011. For example, as illustrated in FIG. 10, S1006-2 is performed before the transmission of a PRS (S1009), and S1007-2 is performed after S1010, that is, after a reflected signal is received.

In S1008, the gNB (the initiating gNB) generates a PRS based on the sensing sequence. For example, 2 bits are sequentially taken from the sensing sequence according to a certain rule and modulated by QPSK to generate a PRS (or a PRS symbol). The specific generation method is the same as that in the above embodiments and is not repeated here.

In S1009, the gNB (the initiating gNB) transmits a PRS sensing signal.

In S1010, the sensing target reflects the sensing signal, and the UE and a plurality of sensing gNBs (or a plurality of sensing UEs) in the receiving group receive the reflected signal, which is optional in self-transmit self-receive.

In S1011, the UE and the plurality of sensing gNBs in the group demodulate the reflected signal based on the sensing sequence. The specific processing method is the same as that in the above embodiments and is not repeated here.

In S1012, the plurality of UEs in the group report sensing data to the gNB (the initiating gNB), and the sensing data carries the ID of the sensing service.

In S1013, the plurality of sensing gNBs in the group report the sensing data to the SF, and the request carries the ID of the sensing service. If the sensing service is triggered by the initiating gNB for the receiving gNB, the receiving gNB may also report the sensing data to the initiating gNB. Messages between the sensing gNBs and the SF may be forwarded via the UPF/AMF. The UPF/AMF may only perform forwarding processing, or may process the sensing data locally.

In S1014, the initiating gNB reports sensing data to the SF, and the sensing data carries the ID of the sensing service. Messages between the initiating gNB and the SF may be forwarded via the UPF/AMF. The UPF/AMF may only perform forwarding or may also process the sensing data locally.

Optionally, after performing S1010, the initiating gNB may also demodulate the reflected signal based on the sensing sequence. The specific processing method is the same as that in the above embodiments and is not repeated here. In this case, in S1014, the sensing data transmitted by the initiating gNB to the SF may also include the sensing data obtained from its own measurements.

By adopting the solution provided in the embodiments of the present application, the downlink sensing signal is generated by using the sensing key shared only between the receiving terminal and the access network device. Consequently, only the receiving terminal that shares the sensing key with the access network device can correctly receive and measure the downlink sensing signal, which can enhance the security of the downlink sensing signal itself, thereby ensuring the security of sensing scenarios.

Furthermore, the above solution designs a method to improve the security of the PRS signal itself based on the PRS signal newly proposed by 3GPP in R16, which further ensures the security of the PRS signal during transmission. Analysis shows that the possible space of the existing PRS signal is about 293, which does not achieve the confidentiality of AES128. During transmission, an attacker can detect the PRS signal through blind detection. The solution provided in the present application proposes a method to enhance the confidentiality of the PRS signal: changing the generation method of the PRS signal. This method can improve the confidentiality performance of the PRS signal itself to reach that of AES128, making it difficult for an eavesdropper to blindly detect the PRS signal at the physical layer. Specifically, the solution provided in the present application defines a new sensing key based on the original AKA key architecture of 3GPP, thereby enhancing the security of the sensing key without requiring separate key generation, making the operation simple and secure. The sensing sequence is generated based on the sensing key, so that by changing the generation method of the sensing sequence corresponding to the sensing signal, the sensing signal not only has good autocorrelation but also increases the key space of the PRS signal, greatly improving the security of the PRS signal.

FIG. 11 is a schematic diagram of a component structure of a first terminal according to an embodiment of this application, and the first terminal includes following steps.
a first communication unit 1101, configured to receive a reflected signal of a downlink sensing signal; where the downlink sensing signal is generated based on a sensing key shared between the first terminal and an access network device.

As illustrated in FIG. 11, the first terminal further includes:
a first processing unit 1102, configured to calculate a sensing sequence based on the sensing key; and obtain first sensing data based on the sensing sequence and the reflected signal of the downlink sensing signal; and
the first communication unit, configured to report the first sensing data.

The first processing unit 1102 is configured to calculate the sensing sequence based on the sensing key and at least one of following parameters: a count value or a first random number.

The first communication unit is configured to receive the first random number from the access network device.

The sensing key is calculated based on a first shared key; where the first shared key is one of: a first key shared between the first terminal and the access network device, a second key shared between the first terminal and a core network device, or a group key corresponding to a first group to which the first terminal belongs.

The sensing key is calculated based on the first shared key and at least one of following parameters: an identifier of the access network device, an identifier of the first terminal, identifiers of a plurality of nodes in the first group, a second random number, or an identifier of a sensing service.

The first communication unit is configured to receive first information; where the first information includes at least one of: a second random number or an identifier of a sensing service.

FIG. 12 is a schematic diagram of a component structure of an access network device according to an embodiment of the present application, and the access network device includes following steps.
a second communication unit 1201, configured to transmit a downlink sensing signal; where the downlink sensing signal is generated based on a sensing key shared between the access network device and one or more nodes.

The downlink sensing signal is generated based on a sensing sequence, and the sensing sequence is calculated based on the sensing key.

The sensing sequence is calculated based on the sensing key and at least one of following parameters: a count value or a first random number.

The second communication unit is configured to transmit the first random number to the one or more nodes; where the first random number is generated by the access network device.

The second communication unit is configured to receive the sensing key from a core network device.

The sensing key is shared between a first terminal and the access network device, and the first terminal is one of the one or more nodes.

The sensing key is calculated based on a second shared key; where the second shared key is one of: a first key shared between a first terminal and the access network device or a group key corresponding to a first group, and the first group includes the first terminal.

The sensing key is calculated based on the second shared key and at least one of the following parameters: an identifier of the access network device, an identifier of the first terminal, identifiers of a plurality of nodes in the first group, a second random number, or an identifier of a sensing service.

The second communication unit is configured to receive second information from a core network device; where the second information includes at least one of: a second random number or an identifier of a sensing service.

The second random number is generated by the access network device.

The second communication unit is configured to transmit first information to the one or more nodes; where the first information includes at least one of: a second random number or an identifier of a sensing service.

The second communication unit is configured to receive a reflected signal of the downlink sensing signal, and measure the reflected signal of the downlink sensing signal to obtain second sensing data; and report the second sensing data.

The second communication unit is configured to receive first sensing data from the one or more nodes; and report the first sensing data of the one or more nodes.

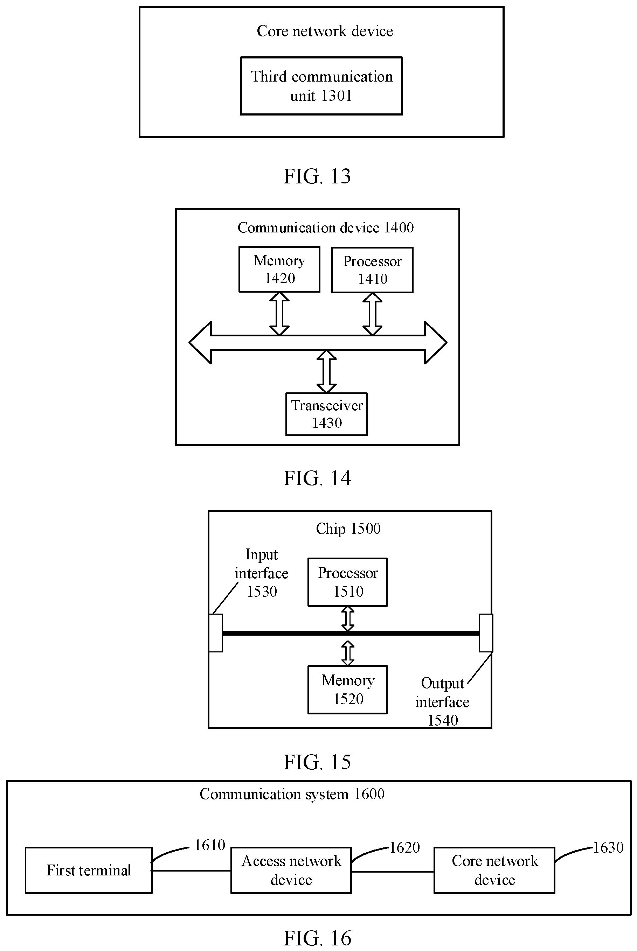

FIG. 13 is a schematic diagram of the component structure of a core network device according to an embodiment of the present application, and the core network device includes the following steps.
a third communication unit 1301, configured to transmit a sensing key to an access network device; where the sensing key is used by the access network device to generate a downlink sensing signal.

The sensing key is calculated based on a second key shared between a first terminal and the core network device.

The sensing key is calculated based on the second key and at least one of following parameters: an identifier of the access network device, an identifier of the first terminal, a second random number, or an identifier of a sensing service.

The third communication unit is configured to transmit second information to the access network device; where the second information includes at least one of: a second random number or an identifier of a sensing service.

The third communication unit is configured to transmit first information to a first terminal; where the first information includes at least one of: an identifier of a sensing service or a second random number.

The third communication unit is configured to receive first sensing data from the first terminal.

The third communication unit is configured to perform at least one of: receiving second sensing data from the access network device; or receiving the first sensing data of a first terminal from the access network device.

The device in the embodiments of the present application may implement the corresponding functions of each device in the above communication method embodiments. The processes, functions, implementation methods, and beneficial effects corresponding to each module (sub-module, unit, component, or the like) in the device may be found in the corresponding descriptions in the above method embodiments, which is not repeated here. It should be noted that the functions described in each module (sub-module, unit, component, or the like) in the device in the embodiments of the present application may be implemented by different modules (sub-modules, units, components, or the like) or by the same module (sub-module, unit, component, or the like).

FIG. 14 is a schematic diagram of a structural of a communication device 1400 according to the embodiments of the present application. The communication device 1400 includes a processor 1410. The processor 1410 may call a computer program from a memory and run the computer program, to enable the communication device 1400 to implement the methods in the embodiments of the present application.

In a possible implementation, the communication device 1400 may further include a memory 1420. The processor 1410 may call a computer program from the memory 1420 and run the computer program, to enable the communication device 1400 to implement the methods in the embodiments of the present application. The memory 1420 may be a separate device independent of the processor 1410, or may be integrated into the processor 1410. In a possible implementation, the communication device 1400 may further include a transceiver 1430, and the processor 1410 may control the transceiver 1430 to communicate with other devices. Specifically, the transceiver 1430 may transmit information or data to other devices, or receive information or data transmitted by other devices. The transceiver 1430 may include a transmitter and a receiver. The transceiver 1430 may further include antenna(s), and the number of antenna(s) may be one or more.

The embodiments of the present application provides a first terminal, which includes: a processor, and a memory in communication with the processor; where the memory is configured to store instructions, and when the instructions are executed by the processor, the instructions enable the first terminal to perform: receiving a reflected signal of a downlink sensing signal; where the downlink sensing signal is generated based on a sensing key shared between the first terminal and an access network device.

The embodiments of the present application provides an access network device, which includes: a processor, and a memory in communication with the processor; where the memory is configured to store instructions, and when the instructions are executed by the processor, the instructions enable the access network device to perform: transmitting a downlink sensing signal, where the downlink sensing signal is generated based on a sensing key shared between the access network device and one or more nodes.

The embodiments of the present application provides a core network device, which includes: a processor, and a memory in communication with the processor; where the memory is configured to store instructions, and when the instructions are executed by the processor, the instructions enable the core network device to perform: transmitting a sensing key to an access network device; where the sensing key is used by the access network device to generate a downlink sensing signal.

FIG. 15 is a schematic diagram of a structural of a chip 1500 according to the embodiments of the present application. The chip 1500 includes a processor 1510, where the processor 1510 may call a computer program from a memory and run the computer program, to implement the methods in the embodiments of the present application. In a possible implementation, the chip 1500 may further include a memory 1520, where the processor 1510 may call a computer program from the memory 1520 and run the computer program to implement the methods performed by each device in the embodiments of the present application. The memory 1520 may be a separate device independent of the processor 1510, or may be integrated into the processor 1510. In a possible implementation, the chip 1500 may further include an input interface 1530. The processor 1510 may control the input interface 1530 to communicate with other devices or chips, and specifically, may obtain information or data transmitted by other devices or chips. In a possible implementation, the chip 1500 may further include an output interface 1540. The processor 1510 may control the output interface 1540 to communicate with other devices or chips, and specifically, may output information or data to other devices or chips. In a possible implementation, the chip may be applied to each device in the embodiments of the present application, and the chip may implement the corresponding processes implemented by each device in each method in the embodiments of the present application, which is not repeated here for the sake of brevity. It should be understood that the chip mentioned in the embodiments of the present application may also be referred to as a system-level chip, a system-on-chip, a chip system, a system-on-chip, or the like.

The processor mentioned above may be a general purpose processor, a digital signal processor, a field programmable gate array, an application specific integrated circuit, or another programmable logic device, a transistor logic device, a discrete hardware component, or the like. The general purpose processor mentioned above may be a microprocessor, any conventional processor, or the like. The memory mentioned above may be a volatile memory or a non-volatile memory, or may include both the volatile and non-volatile memory.

It should be understood that the above memory is exemplary but not a limited illustration. For example, the memory in the embodiments of the present application may also be a static random access memory, a dynamic random access memory, or the like.

FIG. 16 is a schematic block diagram of a communication system 1600 according to the embodiments of the present application. The communication system 1600 includes the first terminal 1610, the access network device 1620, and the core network device 1630. In the above embodiments, all or part of the above embodiments may be implemented by software, hardware, firmware or any combination thereof. When implemented using software, all or part of the above embodiments may be implemented in a form of a computer program product. The computer program product includes one or more computer instructions. When the computer program instructions are loaded and executed on a computer, the process or the function described in the embodiments of the present application is generated in all or part. The computer may be a general purpose computer, a special purpose computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center through wired method (e.g., coaxial cable, optical fiber, or digital subscriber line) or wireless method (e.g., infrared, radio, or microwave). The computer-readable storage medium may be any available medium that is capable of being read by the computer or a data storage device containing one or more available media integrated together, such as a server or a data center. The available medium may be a magnetic medium (e.g., a hard disk), a semiconductor medium (e.g., a solid state disk), or the like.

It should be understood that in the various embodiments of the present application, the magnitude of the serial numbers of the above processes does not indicate an execution order. The execution order of each process should be determined by its function and internal logic, and should not constitute any limitation on the implementation process of the embodiments of the present application.

Those skilled in the art will clearly understand that, for the convenience and brevity of description, the specific working processes of the systems, apparatuses and units described above may refer to the corresponding processes in the above method embodiments, which will not be repeated here.

The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

## Claims

1. A communication method performed by a first terminal, comprising:
receiving a reflected signal of a downlink sensing signal; wherein the downlink sensing signal is generated based on a sensing key shared between the first terminal and an access network device.

2. The method according to claim 1, further comprising:
calculating a sensing sequence based on the sensing key;
obtaining first sensing data based on the sensing sequence and the reflected signal of the downlink sensing signal; and
reporting the first sensing data.

3. The method according to claim 2, wherein calculating the sensing sequence based on the sensing key comprises:
calculating the sensing sequence based on the sensing key and at least one of following parameters: a count value or a first random number.

4. The method according to claim 3, further comprising:
receiving the first random number from the access network device.

5. The method according to any one of claims 1 to 4, wherein the sensing key is calculated based on a first shared key; wherein the first shared key is one of: a first key shared between the first terminal and the access network device, a second key shared between the first terminal and a core network device, or a group key corresponding to a first group to which the first terminal belongs.

6. The method according to claim 5, wherein the sensing key is calculated based on the first shared key and at least one of following parameters: an identifier of the access network device, an identifier of the first terminal, identifiers of a plurality of nodes in the first group, a second random number, or an identifier of a sensing service.

7. The method according to any one of claims 1 to 6, further comprising:
receiving first information; wherein the first information comprises at least one of: a second random number or an identifier of a sensing service.

8. A communication method performed by an access network device, comprising:
transmitting a downlink sensing signal; wherein the downlink sensing signal is generated based on a sensing key shared between the access network device and one or more nodes.

9. The method according to claim 8, wherein the downlink sensing signal is generated based on a sensing sequence, and the sensing sequence is calculated based on the sensing key.

10. The method according to claim 9, wherein the sensing sequence is calculated based on the sensing key and at least one of following parameters: a count value or a first random number.

11. The method according to claim 10, further comprising:
transmitting the first random number to the one or more nodes; wherein the first random number is generated by the access network device.

12. The method according to any one of claims 8 to 11, further comprising:
receiving the sensing key from a core network device.

13. The method according to claim 12, wherein the sensing key is shared between a first terminal and the access network device, and the first terminal is one of the one or more nodes.

14. The method according to any one of claims 8 to 11, wherein the sensing key is calculated based on a second shared key, wherein the second shared key is one of: a first key shared between a first terminal and the access network device or a group key corresponding to a first group, and the first group comprises the first terminal.

15. The method according to claim 14, wherein the sensing key is calculated based on the second shared key and at least one of following parameters: an identifier of the access network device, an identifier of the first terminal, identifiers of a plurality of nodes in the first group, a second random number, or an identifier of a sensing service.

16. The method according to any one of claims 8 to 15, further comprising:
receiving second information from a core network device; wherein the second information comprises at least one of: a second random number or an identifier of a sensing service.

17. The method according to claim 15, wherein the second random number is generated by the access network device.

18. The method according to any one of claims 8 to 17, further comprising:
transmitting first information to the one or more nodes; wherein the first information comprises at least one of: a second random number or an identifier of a sensing service.

19. The method according to any one of claims 8 to 18, further comprising:
receiving a reflected signal of the downlink sensing signal, and measuring the reflected signal of the downlink sensing signal to obtain second sensing data; and
reporting the second sensing data.

20. The method according to any one of claims 8 to 19, further comprising:
receiving first sensing data from the one or more nodes; and
reporting the first sensing data of the one or more nodes.

21. A communication method performed by a core network device, comprising:
transmitting a sensing key to an access network device; wherein the sensing key is used by the access network device to generate a downlink sensing signal.

22. The method according to claim 21, wherein the sensing key is calculated based on a second key shared between a first terminal and the core network device.

23. The method according to claim 22, wherein the sensing key is calculated based on the second key and at least one of following parameters: an identifier of the access network device, an identifier of the first terminal, a second random number, or an identifier of a sensing service.

24. The method according to any one of claims 21 to 23, further comprising:
transmitting second information to the access network device; wherein the second information comprises at least one of: a second random number or an identifier of a sensing service.

25. The method according to any one of claims 21 to 23, further comprising:
transmitting first information to a first terminal; wherein the first information comprises at least one of: an identifier of a sensing service or a second random number.

26. The method according to claim 25, further comprising:
receiving first sensing data from the first terminal.

27. The method according to claim 24 or 25, wherein the method further comprises at least one of:
receiving second sensing data from the access network device; or
receiving first sensing data of a first terminal from the access network device.

28. A first terminal, comprising:
a first communication unit, configured to receive a reflected signal of a downlink sensing signal; wherein the downlink sensing signal is generated based on a sensing key shared between the first terminal and an access network device.

29. The first terminal according to claim 28, further comprising:
a first processing unit, configured to calculate a sensing sequence based on the sensing key; and obtain first sensing data based on the sensing sequence and the reflected signal of the downlink sensing signal; and
the first communication unit, configured to report the first sensing data.

30. The first terminal according to claim 29, wherein the first processing unit is configured to calculate the sensing sequence based on the sensing key and at least one of following parameters: a count value or a first random number.

31. The first terminal according to claim 30, wherein the first communication unit is configured to receive the first random number from the access network device.

32. The first terminal according to any one of claims 28 to 31, wherein the sensing key is calculated based on a first shared key; wherein the first shared key is one of: a first key shared between the first terminal and the access network device, a second key shared between the first terminal and a core network device, or a group key corresponding to a first group to which the first terminal belongs.

33. The first terminal according to claim 32, wherein the sensing key is calculated based on the first shared key and at least one of following parameters: an identifier of the access network device, an identifier of the first terminal, identifiers of a plurality of nodes in the first group, a second random number, or an identifier of a sensing service.

34. The first terminal according to any one of claims 28 to 33, wherein the first communication unit is configured to receive first information; wherein the first information comprises at least one of: a second random number or an identifier of a sensing service.

35. An access network device, comprising:
a second communication unit, configured to transmit a downlink sensing signal; wherein the downlink sensing signal is generated based on a sensing key shared between the access network device and one or more nodes.

36. The access network device according to claim 35, wherein the downlink sensing signal is generated based on a sensing sequence, and the sensing sequence is calculated based on the sensing key.

37. The access network device according to claim 36, wherein the sensing sequence is calculated based on the sensing key and at least one of following parameters: a count value or a first random number.

38. The access network device according to claim 37, wherein the second communication unit is configured to transmit the first random number to the one or more nodes; wherein the first random number is generated by the access network device.

39. The access network device according to any one of claims 35 to 38, wherein the second communication unit is configured to receive the sensing key from a core network device.

40. The access network device according to claim 39, wherein the sensing key is shared between a first terminal and the access network device, and the first terminal is one of the one or more nodes.

41. The access network device according to any one of claims 35 to 38, wherein the sensing key is calculated based on a second shared key, wherein the second shared key is one of: a first key shared between a first terminal and the access network device or a group key corresponding to a first group, and the first group comprises the first terminal.

42. The access network device according to claim 41, wherein the sensing key is calculated based on the second shared key and at least one of following parameters: an identifier of the access network device, an identifier of the first terminal, identifiers of a plurality of nodes in the first group, a second random number, or an identifier of a sensing service.

43. The access network device according to any one of claims 35 to 42, wherein the second communication unit is configured to receive second information from a core network device; wherein the second information comprises at least one of: a second random number or an identifier of a sensing service.

44. The access network device according to claim 42, wherein the second random number is generated by the access network device.

45. The access network device according to any one of claims 35 to 44, wherein the second communication unit is configured to transmit first information to the one or more nodes; wherein the first information comprises at least one of: a second random number or an identifier of a sensing service.

46. The access network device according to any one of claims 35 to 45, wherein the second communication unit is configured to receive a reflected signal of the downlink sensing signal, and measure the reflected signal of the downlink sensing signal to obtain second sensing data; and report the second sensing data.

47. The access network device according to any one of claims 35 to 46, wherein the second communication unit is configured to receive first sensing data from the one or more nodes; and report the first sensing data of the one or more nodes.

48. A core network device, comprising:
a third communication unit, configured to transmit a sensing key to an access network device; wherein the sensing key is used by the access network device to generate a downlink sensing signal.

49. The core network device according to claim 48, wherein the sensing key is calculated based on a second key shared between a first terminal and the core network device.

50. The core network device according to claim 49, wherein the sensing key is calculated based on the second key and at least one of following parameters: an identifier of the access network device, an identifier of the first terminal, a second random number, or an identifier of a sensing service.

51. The core network device according to any one of claims 48 to 50, wherein the third communication unit is configured to transmit second information to the access network device; wherein the second information comprises at least one of: a second random number or an identifier of a sensing service.

52. The core network device according to any one of claims 48 to 50, wherein the third communication unit is configured to transmit first information to a first terminal; wherein the first information comprises at least one of: an identifier of a sensing service or a second random number.

53. The core network device according to claim 52, wherein the third communication unit is configured to receive first sensing data from the first terminal.

54. The core network device according to claim 51 or 52, wherein the third communication unit is configured to perform at least one of: receiving second sensing data from the access network device; or receiving first sensing data of a first terminal from the access network device.
